# EUROPEAN PATENT SPECIFICATION

(11) **EP 1 855 173 B1**
(45) Date of publication and mention of the grant of the patent: **27.07.2011**
(21) Application number: 07009293.7
(22) Date of filing: 09.05.2007
(51) Int. Cl.: G05B 23/02

(54) **Procedure for mass capture of operational data of a wind turbine**
Verfahren zur Massenerfassung von Betriebsdaten einer Windturbine
Procédure de capture massive de données opérationnelles d'une éolienne

(30) Priority: 08.05.2006 ES 200601165
(43) Date of publication of application: 14.11.2007
(73) Proprietor: Gamesa Innovation & Technology, S.L., 31013 Pamplona, Navarra (ES)
(72) Inventor: Llorente González, Jose Ignacio, 31013 - Pamplona (Navarra) (ES)

(56) References cited:
- US-A1- 2004 264 082
- US-A1- 2006 052 985

## Description

This invention refers to a procedure for the capture of operational data of a wind turbine and, in particular, to a procedure for the mass capture of operational data which is especially useful when network malfunctions exist.

### BACKGROUND OF THE INVENTION

In previous techniques various procedures and operational data capture systems for wind turbines have been proposed in order to, fundamentally, optimise wind farm management.

The patent application US20020029097, for example, describes a wind farm control system based on the data supplied by Supervisory Control and Data Acquisition systems, known as SCADA, and other sources of information such as a meteorological station.

Patent application WO03029648 describes a methods and a system for gathering raw operational data of wind turbines in a wind farm on a central station, treatments are carried out on the data which include the generation of corrected data, both the raw data and the corrected operational data are then structurally stored in order to facilitate the creation of reports based on said data which help to optimise wind farm management.

Patent application US20040230377 describes a management system for a wind farm through the use of operational data of the wind turbines which is received and stored in real time on a central server.

Although these types of systems and methods are useful for optimising wind farm management, they do not optimise the analysis of wind turbine behaviour in particular events such as network malfunction occurences, as this type of analysis requires a much greater volume of information than that of the aforementioned systems to be handled in timeframes of tenths of a microsecond.

This invention intends to satisfy this requirement.

US 2004/264082 describes a procedure for the mass capture of data related to a wind turbine.

### DESCRIPTION OF THE INVENTION

This invention provides a procedure for mass capture of sample data on operational variables of a wind turbine connected to an electricity network, indicating the behaviour of the wind turbine during normal operations or when a network malfunction occurs, which comprises a first stage for definition and a second stage for execution.

The definition stage includes the following steps:
- Sending the list of wind turbine operational variables that are monitored from the wind turbine control module to an external computer.
- Selection, from said external computer, of the operational variables to be captured by said control module and the capture frequency F.
- Definition of the trigger conditions which determine the moment at which the mass data capture operation will begin and the time frame during which the mass data capture will take place.

The execution stage includes the following steps:
- Detection of trigger conditions being met and, simultaneously, continuous recording of the sample data for the selected operational variables on the non-volatile memory of the wind turbine control module, until the trigger conditions are met.
- Continuation of the recording of sample data for the selected operational variables until the defined time frame for the data capture has ended.
- Transfer to said external computer of the data relating to said time frame recorded on said non-volatile memory.

The procedure which is subject of this invention is implemented using a software component embedded in the wind turbine control module, hitherto referred to as "data tracker".

The procedure which is subject of this invention allows:
- Selection and mass capture of sample data on variables which indicate the behaviour of the wind turbine, by predetermining the trigger conditions and the duration of the time period in which the data is captured, hitherto referred to as the capture window, which facilitates a very precise study of the wind turbine behaviour when said conditions occur, through the recording of data at the selected frequency and during the time programmed in the capture window.
- Transfer of the data recorded on the "data tracker" to an external computer via RS232, Ethernet or other connection method, for subsequent study of the wind turbine behaviour.

One important characteristic of this invention is that the data captured on the "data tracker" is data obtained when certain trigger conditions have occurred during wind turbine operation, particularly conditions related to malfunctions on the electricity network (voltage gaps, wind turbine connection and disconnection, etc.), event or alarms of the wind turbine itself. Therefore, the conditions that must occur in order for the mass capture of data to begin are selected. Therefore, whilst the selected conditions do not occur, the sample data of the selected variables are continuously recorded on a non-volatile memory of the control module, and will therefore be overwritten time after time. In other words, once the memory is full of sample data from the selected variables, new data continues to be recorded, overwriting the previous data with the more current data, until the trigger conditions occur and are permanently recorded during a capture window defined by the operator. In addition to the sample data of the selected variables, data relating to alarms of events that have occurred with the wind turbine will also be recorded which, for the purpose of this invention, can be considered similar to the first data as regards its treatment within the scope of the procedure, subject of this invention.

One advantage of this invention is that the data captured on the "data tracker" enables the study of the wind turbine's response to voltage gaps and transients as well as the analysis of the quality of the energy provided (harmonics, flickers, etc). This therefore enables wind turbine generators to be adapted to the legally stipulated parameters or to the parameters required by the operator. It is important to note that the "data tracker" is not affected by power supply failure of the control modules as the information recorded on the non-volatile memory is not lost with a power cut, and when the power is restored, the "data tracker" continues the data sampling and storage process.

The methods currently used for real time data capture have a physical transmission limit which means that data capture is relatively slow (disperse) and imprecise. As this limitation disappears with this invention, the analysis of wind turbine behaviour is possible in times of around tenths of a microsecond. The processing time for sample shall only be limited by the refresh time for the variables on the control module. The invention therefore avoids limitations in the transmission of data via series line, Ethernet, etc. from the control module to the external computer and provides a considerable increase in data capture speeds during the very small timeframes in which there is a malfunction on the electricity network or during the short anomalies in wind turbine operation, this therefore considerably increases the precision of studies of said wind turbine variables throughout such short malfunctions.

Another advantage of this invention is that it vastly increases the number of variable which are able to be analysed simultaneously, with more than twenty variables.

Another advantages is the option of various different combinations of a number of variables selected and the sampling frequency with different sampling durations.

Another advantage is that the "data tracker" in addition to recording the sample data of the selected variables, also stores events and alarms that occur on the wind turbine during the capture window, so that a subsequently, a very precise study of the behaviour of the wind turbine can be carried out whilst considering these circumstances.

Other characteristics and advantages of this invention become apparent in the detailed description and the accompanying figures that follow.

### DESCRIPTION OF FIGURES

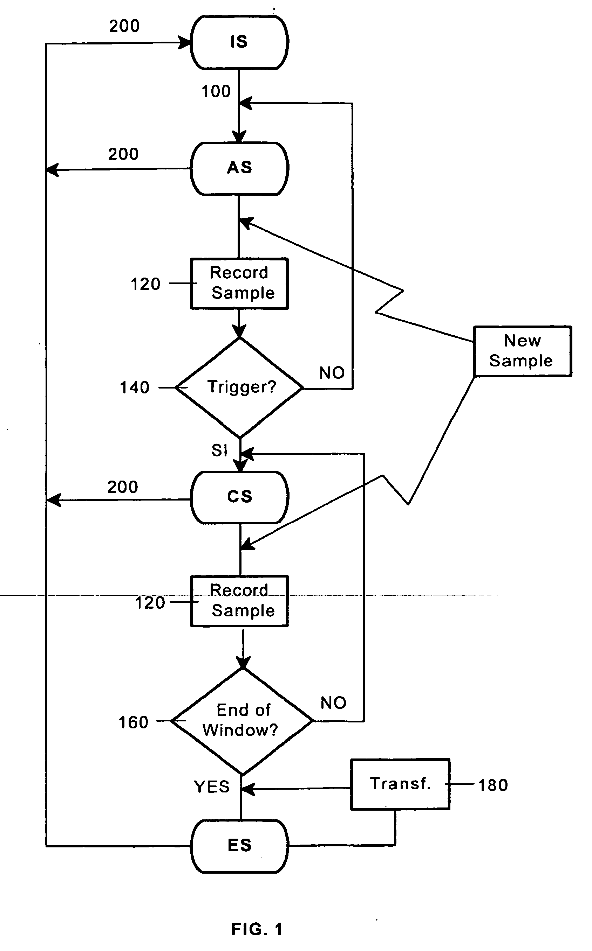

Figure 1 is a flow chart illustrating the execution of the procedure subject of this invention.

### DETAILED DESCRIPTION OF THE INVENTION

Wind turbine control is generally carried out on two levels. The first level, the control module of the wind turbine takes references that are external to the wind turbine, such as wind speeds, network voltage, network frequency, etc. and corrects the angle of the blades, the nacelle orientation, etc. in order to adapt the wind turbine operation and supply the required power in said operational conditions. On the other hand, the second level, the power control module, controls the connection of the wind turbine with the electricity network both in relation to connection and disconnection manoeuvres and in relation to the generation of energy and the quality of the energy supplied to the network.

The "data tracker" used in the procedure which is subject of this invention is integrated in said power control module and is connected to an external computer via RS232 or other connection methods such as Ethernet or wireless connections.

Detailed below is a preferred embodiment of the procedure subject of this invention which is implemented using the "data tracker" and the external computer.

The procedure is made up of two large stages a) and b) for definition and execution, respectively, which include various steps.

The definition stage includes the following three steps:
a1) Sending the list of operational variables from the power control module to an external computer. This list may be different on different wind turbine models.
a2) Selection, from said external computer, of the operational variables to be captured and the capture frequency F of said variables.
   In this step the operational variables to be recorded are defined, up to a predetermined maximum so that the "data tracker" receives the data resulting from the monitoring of these variables carried out by the power control module.
   On the power control modules for current wind turbines, there are around 1000 operational variables; examples of these variables are line voltage, line current, rotor current, active and reactive power, wind turbine speed, network frequencies, etc., of which a maximum of 25 will be selected for a preferred embodiment.
   The F frequency for variable sampling is also selected. In a preferred embodiment a predetermined frequency of 100µs is set and higher frequencies may be selected, and should this be necessary, how to calculate the data to be recorded based on the data provided by the sample at 100µs is defined. For example if we want to capture the variables selected every 400µs, we must programme which of the four sample data produces in that time or any statistical data on them shall be recorded, for example we may select to record the last sample data of the four produced, the average of the four samples, the highest sample data or the lowest sample data.
a3) Definition of the trigger conditions which determine the moment at which the mass data capture operation will begin and the time frame during which the mass data capture will take place.

The trigger conditions are defined in relation to certain values of the monitored variables or in relation to the detection of a predetermined alarm on the power control module.

In a preferred embodiment trigger conditions can be programmed using up to 3 logical conditions that are interrelated using the logical operators OR, AND or XOR, consisting of a comparison of one variable or its absolute value, with another variable, its absolute value, or a constant, using functions such as >, >=, <, <= Ó #.

For this purpose any operational value of the control module can be used, even if it is different to the variables selected to be recorded on the "data tracker".

In turn, it is also possible to programme the trigger conditions so that the trigger occurs after nth repetition of particular condition. This latter option is applicable when the study of the evolution of particular variables is not required when a certain condition occurs for the first time but is required subsequently, for example, on the third repetition.

Finally, the trigger conditions may also include a manual trigger without having to wait for the pre-established conditions to occur, this is very useful for analysing whether the variables and frequencies chosen are correct for the type of study required.

The duration of the time frame, or capture window, in which the sample data of the selected variables will be captured is defined by the capacity of the non-volatile memory, the number of variables selected and the sampling frequency F.

In a preferred embodiment of the invention in which space for 250000 samples is reserved on the non-volatile memory, a sampling frequency of 100µs is used and the maximum number of variables recorded is 25, the following situations can occur:
- Case 1: 1 variable is monitored every 100µs. The maximum sampling duration is 25 seconds ((250000 samples on the non-volatile memory / 1 variable) * 0.1 ms/sample)
- Case 2: 25 variables are monitored every 100µs. The maximum sampling duration is 1 second ((250000 samples on the non-volatile memory / 25 variable) * 0.1 ms/sample)
- Case 3: 25 variables are monitored every 400µs. The maximum sampling duration is 4 seconds ((250000 samples on the non-volatile memory /25 variable) * 0.4 ms/sample)

In all cases, the user may freely chose the capture window duration without logically exceeding the maximum duration in each case.

The execution of the procedure comprises the steps described below in reference to Fig. 1
b1) Detection of trigger conditions being met and, simultaneously, continuous recording of the sample data for the selected operational variables on the non-volatile memory of the wind turbine control module, until the trigger conditions are met.
After the definition stage of the procedure, the "data tracker" is in its initial status IS and passes to active status AS with the activation operation, 100, carried out by the user.
In active status AS and whilst the trigger conditions 140 are not met it continuously carries out 120 operations for record sample data of the selected variables on the non volatile memory, overwriting the previously recorded data with the new data as the non-volatile memory becomes full.
b2) Continuation of the recording of sample data for the selected operational variables until the defined time frame for the data capture has ended.
Once the trigger conditions 140 are detected, the passes to the data capture status CS in which it continues with the operations 120 for recording sample data of the selected variables on the non-volatile memory until the end of the capture window 160 is detected.
At his stage the date and time at which the trigger conditions occurred is recorded and, after the capture window 160 has ended, the "data tracker" passes to ES
Table 1 shown below, illustrates the structure of the data recorded on the non-volatile memory: data blocks of the selected variables (VAR_1, VAR_2, VAR_3, VAR_4 ...) in each instant of the sampling (with a frequency of 100µs). If the trigger conditions occur, for example in t2, the data will be recorded from t2 if it the trigger is programmed to be at the start of the capture window. If, on the other hand, permanent recording from t0 is required, then it must be programmed so that the capture window is placed a certain percentage before the trigger, and so on, with the option of placing the trigger in any position within the capture window.

**Table 1**

| | |
|---|---|
| t0 = 0sec | VAR_1 |
| | VAR_2 |
| | VAR_3 |
| | VAR_4 |
| | ... |
| t1 = 100µs | VAR_1 |
| | VAR_2 |
| | VAR_3 |
| | VAR_4 |
| | ... |
| t2= 200µs | VAR_1 |
| | VAR_2 |
| | VAR_3 |
| | VAR_4 |
| | ... |
| t3= 300µs | VAR_1 |
| | VAR_2 |
| | VAR_3 |
| | VAR_4 |
| | ... |
| | ... |
| tn= n*100µs | VAR_1 |
| | VAR_2 |
| | VAR_3 |
| | VAR_4 |
| | ... |

b3) Transfer to the external computer of the data recorded on the non-volatile memory in relation to the capture window.

The "data tracker" will remain in stand-by status ES until the external computer requests a transfer operation, 180, for the data recorded on the non-volatile memory during the capture window.

After which, the data will be available for performing different analyses which are not subject of this invention.

In the aforementioned AS, CS and ES statuses, the user may perform re-initialisation operations, 200, during which the "data tracker" operations are stopped.

To the preferred embodiment that has just been described, any modifications contained within the scope defined by the following claims may be applied.

## Claims

1. Procedure for the mass capture of sample data on operational variables of a wind turbine connected to an electricity network, indicating its behaviour during normal operations and when a network malfunction occurs, **characterised in that** it is comprised of the following stages:
a) Definition stage which comprises the following steps:
a1) Sending the list of wind turbine operational variables that are monitored from the wind turbine control module to an external computer.
a2) Selection, from said external computer, of the operational variables to be captured and the capture frequency F, with F being proportionate to the control module sampling frequency, and being comprised of tenths of microseconds;
a3) Definition of the trigger conditions related to particular operational variables, events or alarms of the wind turbine, and definition of the trigger location within the capture window time frame, which determine the moment at which the mass data capture operation will begin and the time frame which covers the mass data capture.
b) Execution stage which includes the following steps:
b1) Detection of trigger conditions being met and, simultaneously, continuous recording of the sample data in the sampling frequency for the selected operational variables, events or alarms of the wind turbine, on the non-volatile memory of the wind turbine control module, until the trigger conditions are met;
b2) Continuation of the recording of sample data for the selected operational variables until the defined time frame for the data capture has ended;
b3) Transfer to the external computer of the data relating to said time frame recorded on said non-volatile memory.

2. Procedure for the capture of operational data of a wind turbine according to claim 1, **characterised in that** the proportion between the data capture frequency and the sampling frequency of the control modules is a whole number N greater than or equal to 1.

3. Procedure for the capture of operational data of a wind turbine according to the previous claims, **characterised in that** only one datum of a series of N data is recorded on the non-volatile memory of the control module, with this datum being the maximum value, the minimum value, the average or the last value registered of the selected variables.

4. Procedure for the mass capture of sample data on operational variables of a wind turbine according to claim 1, **characterised in that** the trigger can be manually forced by an operator.

5. Procedure for the capture of operational data of a wind turbine as per any of the previous claims, **characterised by** the fact that the maximum number of operational variables selected is 25.

## Patentansprüche

1. Verfahren zur massiven Erfassung von Musterdaten über die Betriebsvariablen von Windenergieanlagen, die an ein Stromnetz angeschlossenen sind, unter Angabe der Leistung bei normalem Betrieb und im Falle einer Fehlfunktion im Stromnetz, das sich **dadurch** auszeichnet, dass es aus folgenden Phasen besteht:
a) Definitionsphase bestehend aus folgenden Schritten:
a1) Die Liste der überwachten Betriebsvariablen der Windenergieanlage wird vom Steuermodul der Windenergieanlage an einen externen Computer gesendet.
a2) An diesem externen Computer werden die zu erfassenden Betriebsvariablen sowie die Erfassungsfrequenz F gewählt, wobei F proportional der Abtastfrequenz des Steuermoduls ist und aus Zehntel Mikrosekunden besteht;
a3) Definition der Auslösebedingungen im Zusammenhang mit speziellen Betriebsvariablen, Vorgängen oder Warnmeldungen der Windenergieanlage, sowie Definition des Auslösepunkts im Zeitbereich des Erfassungsfensters, womit der Moment bestimmt wird, in dem der massive Datenerfassungsvorgang beginnt, sowie der Zeitraum, in dem die massive Datenerfassung erfolgt.
a) Ausführungsphase mit folgenden Schritten:
b1) Feststellung, ob die Auslösebedingungen erfüllt werden, und gleichzeitig ständige Aufzeichnung von Musterdaten in der Abtastfrequenz für die gewählten Betriebsvariablen, Vorgänge oder Warnmeldungen der Windenergieanlage auf dem Festspeicher des WEA-Steuermoduls, bis die Auslösebedingungen erfüllt sind;
b2) Fortsetzung der Aufzeichnung von Musterdaten für die gewählten Betriebsvariablen, bis der festgelegte Zeitraum für die Datenerfassung abgelaufen ist,
b3) Obertragung der, mit dem genannten Zeitfenster im Zusammenhang stehenden und auf genanntem Festpeicher aufgezeichneten, Daten auf einen externen Computer.

2. Verfahren zur Erfassung von Betriebsdaten einer Windenergieanlage gemäß Anspruch 1, das sich **dadurch** auszeichnet, dass das Verhältnis zwischen der Datenerfassungsfrequenz und der Abtastfrequenz der Steuermodule eine ganze Zahl N und größer oder gleich 1 ist.

3. Verfahren zur Erfassung von Betriebsdaten einer Windenergieanlage gemäß der obigen Ansprüche, das sich **dadurch** auszeichnet, dass nur ein Wert einer Serie von N Daten auf dem Festspeicher eines Steuermoduls aufgezeichnet wird, wobei dieser Wert der Höchst-, Mindest- oder Durchschnittswert bzw. der zuletzt registrierte Wert der gewählten Variablen ist.

4. Verfahren zur massiven Erfassung von Musterdaten zu Betriebsvariablen einer Windenergieanlage gemäß Anspruch 1, das sich **dadurch** auszeichnet, dass das Auslösen vom Bedienpersonal manuell forciert werden kann.

5. Verfahren zur Erfassung von Betriebsdaten einer Windenergieanlage gemäß der obigen Ansprüche, das sich **dadurch** auszeichnet, dass die Höchstzahl der gewählten Betriebsvariablen 25 beträgt.

## Revendications

1. Procédure pour le prélèvement massif d'échantillons de variables opérationnelles d'un aérogénérateur raccordé à un réseau électrique, en indiquant son comportement dans le cadre d'un fonctionnement normal et en cas de dysfonctionnements du réseau, laquelle procédure se compose des étapes suivantes :
a) Phase de définition composée des étapes suivantes :
a1) Envoi de la liste des variables opérationnelles de l'aérogénérateur, contrôlées par le module de commande de l'aérogénérateur, vers un ordinateur externe.
a2) Sélection, sur ce même ordinateur, des variables opérationnelles à prélever et la fréquence de prélèvement F, où F est proportionnelle à la fréquence d'échantillonnage du module de commande et donnée en dixièmes de microsecondes ;
a3) Définition des conditions de déclenchement liées à des variables opérationnelles, événements ou alarmes de faérogénérateur particuliers et définition de l'emplacement de déclenchement dans la fenêtre temporelle de prélèvement, lequel détermine le moment où l'opération de prélèvement massif de données commencera et la durée de ce prélèvement massif de données.
b) Phase d'exécution composée des étapes suivantes :
b1) Détection des conditions de déclenchement rencontrées et, simultanément, enregistrement continu des échantillons dans la fréquence d'échantillonnage pour les variables opérationnelles, événements ou alarmes de l'aérogénérateur sélectionnés, sur la mémoire non volatile du module de commande de l'aérogénérateur jusqu'à ce que les conditions de déclenchement soient réunies ;
b2) Poursuite de l'enregistrement de données échantillonnées pour les variables opérationnelles sélectionnées, jusqu'à ce que la durée prévue pour le prélèvement des données s'achève ;
b3) Transfert vers l'ordinateur externe des données relatives au cadre temporel en question, enregistrées sur la mémoire non volatile citée.

2. Procédure pour le prélèvement de données opérationnelles d'un aérogénérateur selon la revendication 1, **caractérisée par le fait que** la proportion entre la fréquence des données prélevées et la fréquence d'échantillonnage des modules de commande est un nombre entier N, supérieur ou égal à 1,

3. Procédure pour le prélèvement de données opérationnelles d'un aérogénérateur selon les revendications précédentes, **caractérisée par le fait que** seule une donnée de la série de N données est enregistrée sur la mémoire non volatile du module de commande, où cette donnée est la valeur maximale, la valeur minimale, la valeur moyenne ou la dernière valeur des variables sélectionnées.

4. Procédure pour le prélèvement massif d'échantillons de variables opérationnelles d'un aérogénérateur selon la revendication 1, **caractérisée par le fait que** le déclenchement peut être forcé manuellement par un opérateur.

5. Procédure pour le prélèvement de données opérationnelles d'un aérogénérateur selon les revendications précédentes, **caractérisée par le fait que** le nombre maximum de variables opérationnelles sélectionnées est égal à 25.
